# EUROPEAN PATENT APPLICATION

(11) **EP 2 650 509 A2**
(43) Date of publication of application: **16.10.2013**
(21) Application number: 13162849.7
(22) Date of filing: 09.04.2013
(51) Int. Cl.: F02C 3/34, F02C 9/50

(54) **A method and system for controlling an extraction pressure and temperature of a stoichiometric EGR system**

(30) Priority: 12.04.2012 US 201213444906
(71) Applicant: General Electric Company, Schenectady, New York 12345 (US)
(72) Inventor: Wichmann, Lisa Anne, Greenville, South Carolina 29615 (US); Butkiewicz, Jeffrey John, Greenville, South Carolina 29615 (US); Simpson, Stanley Frank, Greenville, South Carolina 29615 (US)
(74) Representative: Cleary, Fidelma

(57) **Abstract**

The present invention provides a system 100 and method that yields an exhaust stream 270 that includes a relatively high concentration of a desirable gas and is also substantially oxygen-free. This desirable gas includes, but is not limited to: Carbon Dioxide (CO2), Nitrogen (N2), or Argon. The present invention also provides a way to control the physical property of the exhaust stream 270.

## Description

The present application relates generally to a combined-cycle powerplant; and more particularly to a system and method for operating a turbomachine incorporated with stoichiometric exhaust gas recirculation (S-EGR).

In an air-ingesting turbomachine, compressed air and fuel are mixed and combusted to produce a high energy fluid (hereinafter "working fluid") that is directed to a turbine section. The working fluid interacts with turbine buckets to generate mechanical energy, which is transferred to a load. In particular, the turbine buckets rotate a shaft coupled to the load, such as an electrical generator. The shaft rotation induces current in a coil electrically coupled to an external electrical circuit. In the case where the turbomachine is part of a combined cycle power plant, the high energy fluids exiting the turbine section are directed to a heat recovery steam generator (HRSG), where heat from the working fluid is transferred to water for steam generation.

The combustion process creates undesirable emissions and/or pollutants, such as Carbon Monoxide (CO) and Oxides of Nitrogen (NOx). Reducing these pollutants is necessary for environmental and/or regulatory reasons. Exhaust gas recirculation (EGR) processes help to reduce these pollutants.

S-EGR is a form of EGR where the combustion process consumes a supplied oxidant. The oxidant can include, for example, air or an oxygen source. In a S-EGR system, only enough oxidant is supplied to the combustion system to achieve complete combustion, on a mole basis. The S-EGR process can be configured to yield an exhaust stream that includes a relatively high concentration of a desirable gas and is substantially oxygen-free. This desirable gas includes, but is not limited to: Carbon Dioxide (CO2), Nitrogen (N2), or Argon. Significantly, there is a desire for S-EGR systems and methods that can generate exhaust streams with relatively high concentration of the desirable gas, which can then be supplied and used in third party processes.

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In accordance with a first embodiment of the present invention, a system comprises: an oxidant compressor comprising an ac_inlet and an ac_outlet; a compressor comprising a compressor inlet and a compressor outlet; wherein the compressor operates independently of the oxidant compressor; at least one combustion system that operatively generates a working fluid and comprises a head end and a discharge end, wherein the head end is fluidly connected to: an air stream conduit, the compressor outlet, and wherein the at least one combustion system is connected to a first fuel supply; a primary turbine section operatively connected to the compressor, wherein the turbine section comprises a PT_inlet which receives the working fluid from the at least one combustion system, and a PT_outlet that discharges the working fluid; an exhaust gas recirculation (EGR) system fluidly connected between the discharge of an exhaust section and the compressor inlet, wherein the compressor inlet ingests the working fluid exiting the exhaust section; wherein the EGR system comprises a control device for adjusting a physical property of the working fluid; and an extraction that removes a portion of the working fluid; wherein the control device and the compressor jointly operate in a manner that determines a pressure of the working fluid flowing through the extraction.

In accordance with a second embodiment of the present invention, a method comprises: operating an oxidant compressor to compress an ingested oxidant; operating a compressor to compress a working fluid, wherein the operation of the oxidant compressor is independent of the operation of the compressor; passing to a primary combustion system: a compressed oxidant, derived from the oxidant compressor, and a compressed working fluid, derived from the compressor; delivering a fuel to the primary combustion system which operatively combusts a mixture of: the fuel, the compressed oxidant and the compressed working fluid; creating the working fluid; passing the working fluid from the primary combustion system to a primary turbine section; operating an EGR system to recirculate the working fluid exiting an exhaust section to flow into an inlet of the compressor; wherein the EGR system comprises a control device for adjusting a physical property of the working fluid; extracting a portion of the working fluid; wherein the working fluid is nearly oxygen-free, and the primary combustion system operates in a substantially stoichiometric manner; and operating the control device and the compressor in a manner that determines a pressure of the working fluid flowing through the extraction; wherein the method yields a substantially oxygen-free flow of a desirable gas.

Various features, aspects, and advantages of the present invention may become better understood when the following detailed description is read with reference to the accompanying figures (FIGS) in which like characters represent like elements/parts throughout the FIGS., and in which:
FIG 1 is a simplified schematic of a standard gas turbine operating in a closed-cycle mode, illustrating a first embodiment of the present invention.
FIG 2 is a simplified schematic of a reheat gas turbine operating in a closed-cycle mode, illustrating a second embodiment of the present invention.
FIG 3 is a simplified schematic of a standard gas turbine operating in a closed-cycle mode, illustrating a third embodiment of the present invention.
FIG 4 is a simplified schematic of a reheat gas turbine operating in a closed-cycle mode, illustrating a fourth embodiment of the present invention.

One or more specific embodiments of the present invention will be described below. In an effort to provide a concise description of these embodiments, all features of an actual implementation may not be described in the specification. It should be appreciated that in the development of any such actual implementation, as in an engineering or design project, numerous implementation-specific decisions are made to achieve the specific goals, such as compliance with system-related and/or business-related constraints, which may vary from one implementation to another. Moreover, it should be appreciated that such effort might be complex and time consuming, but would nevertheless be a routine undertaking of design, fabrication, and manufacture for those of ordinary skill having the benefit of this disclosure.

Detailed example embodiments are disclosed herein. However, specific structural and functional details disclosed herein are merely representative for purposes of describing example embodiments. Embodiments of the present invention may, however, be embodied in many alternate forms, and should not be construed as limited to only the embodiments set forth herein.

Accordingly, while example embodiments are capable of various modifications and alternative forms, embodiments thereof are illustrated by way of example in the figures and will herein be described in detail. It should be understood, however, that there is no intent to limit example embodiments to the particular forms disclosed, but to the contrary, example embodiments are to cover all modifications, equivalents, and alternatives falling within the scope of the present invention.

The terminology used herein is for describing particular embodiments only and is not intended to be limiting of example embodiments. As used herein, the singular forms "a", "an" and "the" are intended to include the plural forms as well, unless the context clearly indicates otherwise. The terms "comprises", "comprising", "includes" and/or "including", when used herein, specify the presence of stated features, integers, steps, operations, elements, and/or components, but do not preclude the presence or addition of one or more other features, integers, steps, operations, elements, components, and/or groups thereof.

Although the terms first, second, primary, secondary, etc. may be used herein to describe various elements, these elements should not be limited by these terms. These terms are only used to distinguish one element from another. For example, but not limiting to, a first element could be termed a second element, and, similarly, a second element could be termed a first element, without departing from the scope of example embodiments. As used herein, the term "and/or" includes any, and all, combinations of one or more of the associated listed items.

Certain terminology may be used herein for the convenience of the reader only and is not to be taken as a limitation on the scope of the invention. For example, words such as "upper", "lower", "left", "right", "front", "rear", "top", "bottom", "horizontal", "vertical", "upstream", "downstream", "fore", "aft", and the like; merely describe the configuration shown in the FIGS. Indeed, the element or elements of an embodiment of the present invention may be oriented in any direction and the terminology, therefore, should be understood as encompassing such variations unless specified otherwise.

Various embodiments of the present invention provide a system and method that creates a flow stream of CO2 that is substantially free of oxygen. Here, the CO2 may be separated from N2 in a cost-effective manner.

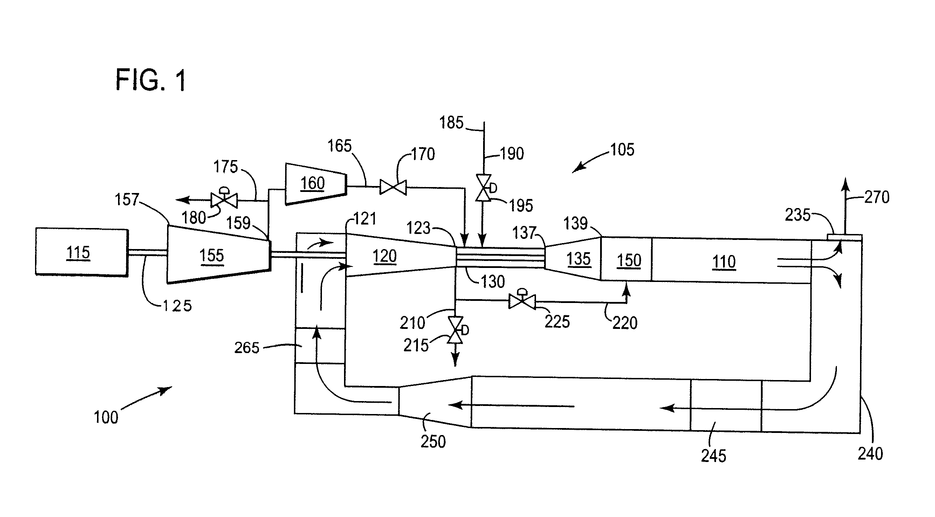

The present invention may be applied to a variety of air-ingesting turbomachines. This may include, but is not limited to, heavy-duty gas turbines, aero-derivatives, or the like. Although the following discussion relates to the gas turbines illustrated in FIGS 1-4, embodiments of the present invention may be applied to a gas turbine with a different configuration. For example, but not limiting of, the present invention may apply to a gas turbine with different, or additional, components than those illustrated in FIGS 1-4.

Embodiments of the present invention may apply to, but are not limited to, a combined-cycle powerplant operating under stoichiometric, or non-stoichiometric, conditions.

Stoichiometric conditions may be considered operating a combustion process with only enough oxidizer, for example oxygen, to promote complete, or substantially complete, combustion. Complete combustion bums a hydrocarbon-based fuel with oxygen and yields carbon dioxide and water as the primary byproducts. Many factors may influence whether complete combustion occurs. These factors may include, but are not limited to, oxygen in proximity to a fuel molecule, vibrations, dynamic events, shock waves, etc. In order to promote carbon dioxide formation rather than carbon monoxide formation, additional oxygen is normally delivered with the fuel supply to promote a complete combustion reaction.

Non-stoichiometric conditions may be considered operating a combustion system with either more or less oxidizer than is required for the combustion process. Non-stoichiometric conditions are common on a standard combustion system, or non S-EGR systems.

As used herein, "working fluid" may be considered the resultant of the combustion process. Embodiments of the present invention are not limited to a working fluid having a specific composition or physical properties. On the contrary, the composition and/or a physical property of the working fluid may change while flowing through the various components, systems, and/or structures described herein.

Referring now to the FIGS, where the various numbers represent like components throughout the several views, FIG 1 is a simplified schematic of a standard gas turbine 105 operating in a closed-cycle mode, illustrating a first embodiment of the present invention.

In FIG 1, a site 100 includes: a gas turbine 105, operatively connected to a heat recovery steam generator (HRSG) 110, a load 115, and an extraction 210. The gas turbine 105 may include a GT compressor 120 having a compressor inlet 121 and a compressor outlet 123. The GT compressor 120 ingests the working fluid received from the EGR system 240, compresses the working fluid, and discharges the compressed working fluid through the compressor outlet 123. The gas turbine 105 may include an oxidant compressor 155 that ingests an oxidant, hereafter referred to as ambient air, through an ac_inlet 157, compresses the same, and discharges the compressed air through the ac_outlet 159. The oxidant compressor 155 may deliver the compressed airstream to the primary combustion system 130 through an airstream conduit 165; which may include: a vent conduit 175, a vent valve 180, booster compressor 160 and isolation valve 170; each of these components may be operated as needed.

In embodiments of the present invention, the GT compressor 120 operates independently and distinct of the oxidant compressor 155. The gas turbine 105 also includes a primary combustion system 130 that receives through a head end: the compressed working fluid from the GT compressor outlet 123; a fuel supply 185, comprising a first fuel conduit 190 and first fuel valve 195; and the compressed ambient air from the airstream conduit 165. The primary combustion system 130 combusts those fluids creating the working fluid that may be substantially oxygen-free. The working fluid then exits the primary combustion system 130 through a discharge end.

The fuel supply 185, in accordance with embodiments of the present invention, may provide fuel that derives from a single source to the primary combustion systems 130. Alternatively, the fuel supply 185 may provide fuel that derives from a first fuel source to the primary combustion system 130; and fuel that derives from a second fuel source to the combustion system 130.

An embodiment of the gas turbine 105, also includes a primary turbine section 135 having a PT_inlet 137 that receives some of the working fluid from the primary combustion system 130 of which the PT_inlet 137 is fluidly connected. The primary turbine section 135 may include rotating components and stationary components installed alternatively in the axial direction adjacent a rotor 125. The primary turbine section 135 converts the working fluid to a mechanical torque which drives the load 115 (generator, pump, compressor, etc). The primary turbine section 135 may then discharge the working fluid through the PT_outlet 139 to an exhaust section 150 and then to the HRSG 110, which operatively transfers heat from the working fluid to water for steam generation.

The EGR system 240 operatively returns to the GT compressor 120 the working fluid exiting the HRSG 110. The EGR system 240 receives the working fluid discharged by the HRSG 110; which is fluidly connected to a receiving or upstream end of the EGR system 240. A discharge end of the EGR system 240 may be fluidly connected to the inlet of the GT compressor 120, as described. Here, the GT compressor 120 ingests the working fluid.

An embodiment of the EGR system 240 comprises a control device that operatively adjusts a physical property of the working fluid. For example, but not limited to, the control device may comprise the form of: a heat exchanger 245, an EGR compressor 250, and/or an intercooler 265. As discussed below, embodiments of the EGR system may comprise multiple control devices. The EGR system 240 may also comprise an EGR damper 235 which facilitates a purging process, which may vent purged fluid to atmosphere via a discharge 270.

The extraction 210 operationally removes a portion of the working fluid for use by a third-party process. The extraction 210 may be integrated with a circuit that comprises an extraction isolation valve 215, a recirculation conduit 220 and a recirculation valve 225. The extracted working fluid may be a substantially oxygen-free desirable gas; useful for many third-party processes. As discussed, this desirable gas may include, but is not limiting to CO2, N2, or Argon. In a non-limiting example, up to 100% of the working fluid may flow through the extraction 210 to the third-party process.

As described herein, the combustion system 130 that is immediately adjacent to the extraction 210 may operate in a substantially stoichiometric operating mode.

As described herein, various embodiments of the present invention may operate a control device and a compressor in a manner that determines a parameter of the working fluid flowing through an extraction. The parameter comprises at least one of: a pressure, a temperature, humidity, or other physical property. Therefore, it is not the intent to limit the parameter to a pressure and/or temperature.

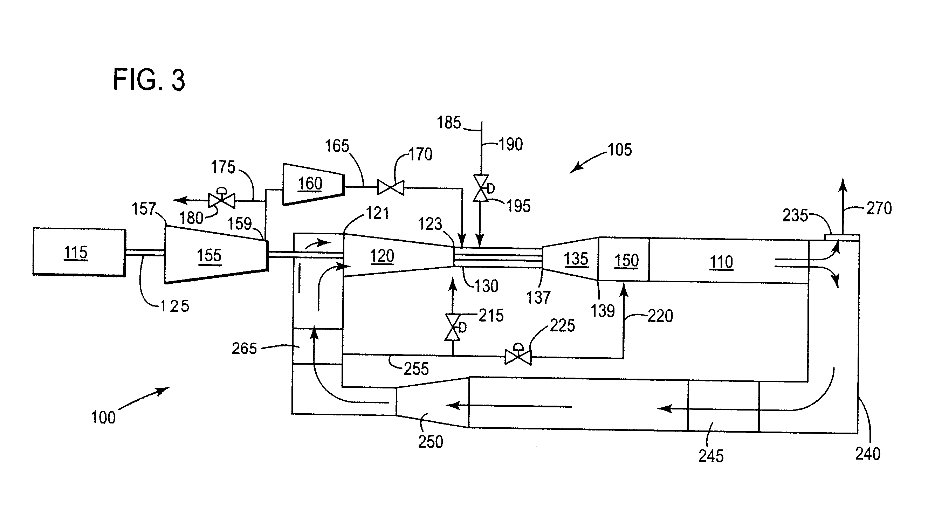

As illustrated in FIGS 1 and 3, embodiments of the present invention may position the extraction 210 at, or in the GT compressor 120, the primary combustion system 130, or the primary turbine section 135. Here, the working fluid may exhibit a relatively higher pressure, useful for high pressure applications. These applications may include, but are not limited to: a carbon capture system (CCS), or other applications that desire high pressure, substantially oxygen-free, gas.

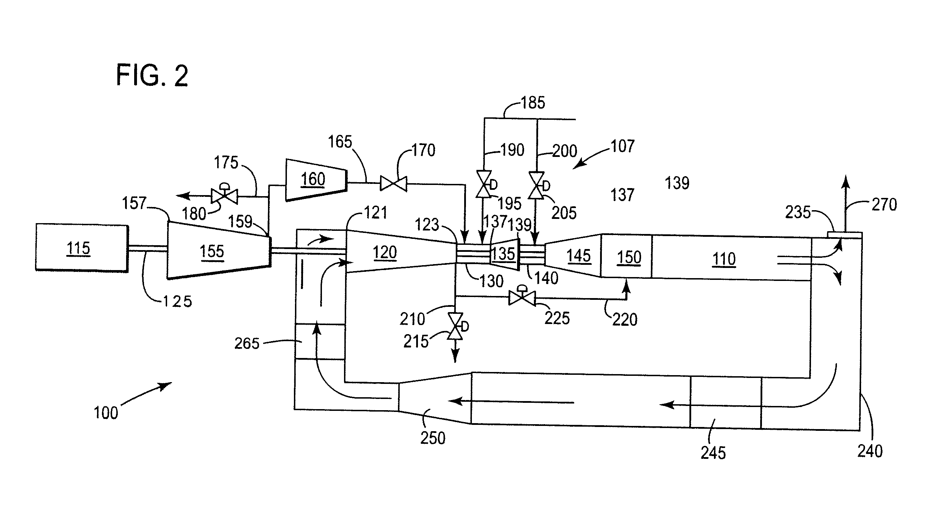

The above discussion, in relation to FIG 1, describes the basic concept of certain aspects of the invention. For convenience, components and elements that correspond to those identified in FIG 1 are identified with similar reference numerals in FIGS 2-4, but are only discussed in particular as necessary or desirable to an understanding of each embodiment.

FIG 2 is a simplified schematic of a reheat gas turbine operating in a closed-cycle mode, illustrating a second embodiment of the present invention. The primary difference between this second embodiment and the first embodiment is the application of the present invention to a reheat gas turbine 107. Here, the reheat gas turbine 107 comprises the following additional components (as illustrated in FIG 2): a secondary combustion system 140, a secondary turbine section 145, and a second fuel conduit and valve 200, 205 respectively. In an embodiment of the present invention, the first fuel conduit 190 and the second fuel conduit 200 may supply different fuels to the respective combustion systems 130,140.

Operationally, in this second embodiment, the secondary combustion system 140 may function as a stoichiometric system. In use, the first and second embodiments of the present invention may operate as follows. As the oxidant compressor 155 delivers compressed ambient air to the primary combustion system 130, the compressor 120 delivers compressed working fluid to the primary combustion system 130. If ambient air at a higher pressure and/or flow rate, is required, then the booster compressor 160 may be used. The fuel supply nearly simultaneously delivers a hydrocarbon-based fuel (natural gas, or the like) to the primary combustion system 130. Next, some of the working fluid may flow through extraction 210. In a non-limiting example, up to 100% of the working fluid may flow through the extraction 210 to the third-party process.

Next, the primary combustion system 130 combusts the mixture of those three fluids to create the working fluid, which engages the primary turbine section 135. Next, the working fluid may flow through the secondary combustion system 140. Here, the working fluid may be mixed with a fuel from the second fuel circuit 200; and a second combustion process occurs. In embodiments of the present invention, the fuel supplied by the first fuel conduit 190 may differ from the fuel supplied by the second fuel conduit 200. Next, the working fluid may engage the secondary turbine section 145 and then the exhaust section 150. Next, the working fluid may enter the HRSG 110, as described. Next, the working fluid may enter the EGR system 240. Depending on the configuration of the EGR system 240, the working fluid may flow through the heat exchanger 245, where a temperature reduction may occur. Then, the working fluid may flow through an EGR compressor 250 and/or an intercooler 265. Elements 245, 250, 265 serve to adjust the pressure and/or temperature of the working fluid prior to returning to the reheat gas turbine 107 through the compressor 120. As discussed, FIG 2 represents a reheat gas turbine application. The second embodiment of the present invention may operate substantially similar to the first embodiment, although the reheat operation differs from non-reheat operation.

As described herein, the combustion system 130,140 that is immediately adjacent to the extraction 210 may operate in a substantially stoichiometric operating mode.

FIG 3 is a simplified schematic of a standard gas turbine operating in a closed-cycle mode, illustrating a third embodiment of the present invention. The primary difference between this third embodiment and the first embodiment is the location of the extraction 255, which may be positioned at an optimum location on the EGR system. The extraction 255 may have a pressure in the low to medium range, relative to the high pressure extraction 210 associated with embodiments associated with FIGS 1 and 2. This may be desirable for third-party applications that desire a substantially oxygen-free gas and in a relatively low to medium pressure range.

As described herein, the combustion system 130,140 that is immediately adjacent to the extraction 210 may operate in a substantially stoichiometric operating mode.

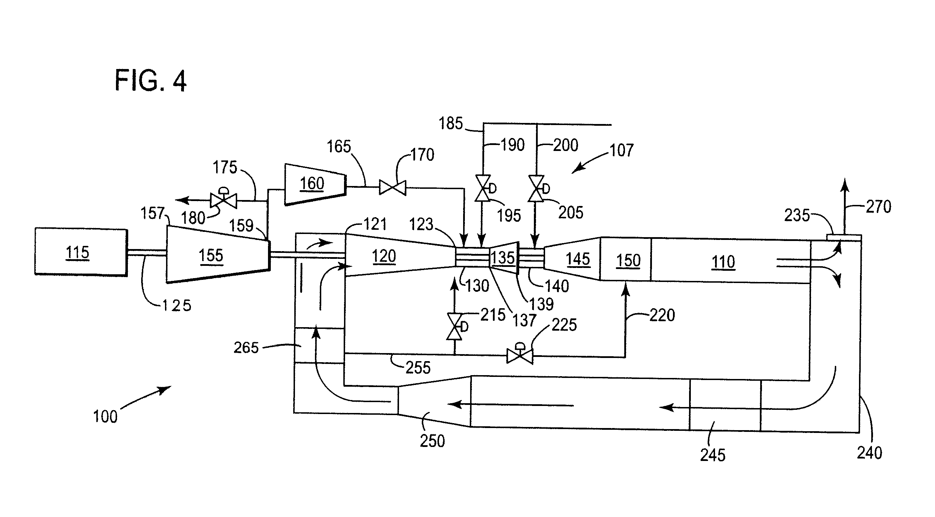

FIG 4 is a simplified schematic of a reheat gas turbine operating in a closed-cycle mode, illustrating a fourth embodiment of the present invention. The primary difference between this fourth embodiment and the third embodiment is the application of third embodiment to a reheat gas turbine 107. Here, the reheat gas turbine 107 comprises the following additional components (as illustrated in FIG 4): a secondary combustion system 140, a secondary turbine section 145, and a second fuel conduit and valve 200, 205 respectively. In an embodiment of the present invention, the first fuel conduit 190 and the second fuel conduit 200 may supply different fuels to the respective combustion systems 130,140.

As described herein, the combustion system 130,140 that is immediately adjacent to the extraction 255 may operate in a substantially stoichiometric operating mode.

Operationally, in this fourth embodiment, the secondary combustion system 140 may function as a stoichiometric system. In use, the third and fourth embodiments of the present invention may operate as follows. As the oxidant compressor 155 delivers compressed ambient air to the primary combustion system 130, the GT compressor 120 delivers compressed working fluid to the primary combustion system 130. If ambient air at a higher pressure, and/or flow rate, is required, then the booster compressor 160 may be used. The fuel supply nearly simultaneously delivers a hydrocarbon-based fuel (natural gas, or the like) to the primary combustion system 130.

Next, the primary combustion system 130 combusts the mixture of those three fluids to create the working fluid, which then engages the primary turbine section 135. Next, the working fluid may flow through the exhaust section 150.

For the reheat embodiment of FIG 4, the working fluid may flow from the primary turbine section 135 to the secondary combustion system 140. Here, the working fluid may be mixed with a fuel from the second fuel circuit 200; and a second combustion process occurs. In embodiments of the present invention, the fuel supplied by the first fuel conduit 190 may differ from the fuel supplied by the second fuel conduit 200. Next, the working fluid may engage the secondary turbine section 145 and then the exhaust section 150.

For both the reheat and non-reheat embodiments, the working fluid may enter the HRSG 110, after exiting the exhaust section 150, as described. Next the working fluid may enter the EGR system 240. Depending on the configuration of the EGR system 240, the working fluid may flow through the heat exchanger 245, where a temperature reduction may occur. Then, the working fluid may flow through an EGR compressor 250 (if supplied). Next, some of the working fluid may flow through extraction 255. In a non-limiting example, up to 100% of the working fluid may flow through the extraction 255 to the third-party process. In an embodiment of the present invention, the extraction 255 may be located between the EGR compressor 250 and the intercooler 265; on EGR systems 240 so configured. Elements 250, 265 serve to adjust the pressure and/or temperature of the working fluid prior to returning to the gas turbine 105 through the compressor 120. As discussed, FIG 4 represents a reheat gas turbine application. The fourth embodiment of the present invention may operate substantially similar to the third embodiment, although the reheat operation differs.

The third and fourth embodiments of the present invention may provide substantial flexibility for a user having an EGR configuration that includes both the EGR compressor 250 and the intercooler 265. First, the EGR compressor 250 and the GT compressor 120 may operate in a manner where the pressure ratio across each compressor 120, 250 is actively changed to create a desired pressure at the extraction 255. This may allow a user to change the working fluid pressure as the needs of the third-party process changes. Another benefit with this EGR configuration involves the temperature of the working fluid. The intercooler 265 may be used to adjust the temperature of the working fluid entering the GT compressor 120. The use of the intercooler 265 may lower the temperature at the aft-end of the GT compressor 120 and/or at the entrance of the combustion system. This may provide a cost savings on the associated materials. Furthermore, the intercooler 265 may affect the temperature of the cooling fluid supplied to the turbine section(s); possibly allowing the removal of an often used cooling fluid skid.

Various embodiments of the present invention also provide flexibility on where to connect the extraction 210 to the gas turbine 105. Some connection locations may include, but are not limited to, the combustion system 130,140; the primary turbine section 135; or the secondary turbine section 145.

Embodiments of the present invention may be applied to a gas turbine in either a simple-cycle configuration or a combined-cycle configuration. Although, the discussion herein is based on a gas turbine in a combined-cycle configuration. It is not the intent to limit the present invention to combined-cycle applications. Embodiments of the present invention may be applied to a gas turbine operating in a simple-cycle configuration. Here, the working fluid may flow from the last turbine section 135,145 through the exhaust section 150 and then to the EGR system 240. This operation may supply a substantially oxygen-free fluid to the inlet 121 of the GT compressor 120, promoting stoichiometric operation.

Although specific embodiments have been illustrated and described herein, those of ordinary skill in the art appreciate that any arrangement, which is calculated to achieve the same purpose, may be substituted for the specific embodiments shown and that the invention has other applications in other environments. This application is intended to cover any adaptations or variations of the present invention. The following claims are in no way intended to limit the scope of the invention to the specific embodiments described herein.

As one of ordinary skill in the art will appreciate, the many varying features and configurations described above in relation to the several embodiments may be further selectively applied to form other possible embodiments of the present invention. Those skilled in the art will further understand that all possible iterations of the present invention are not provided or discussed in detail, even though all combinations and possible embodiments embraced by the several claims below or otherwise are intended to be part of the instant application. In addition, from the above description of several embodiments of the invention, those skilled in the art will perceive improvements, changes, and modifications. Such improvements, changes, and modifications within the skill of the art are also intended to be covered by the appended claims. Further, it should be apparent that the foregoing relates only to the described embodiments of the present application and that numerous changes and modifications may be made herein without departing from the spirit and scope of the application as defined by the following claims and the equivalents thereof.

Various aspects and embodiments of the present invention are defined by the following numbered clauses:
1. A system comprising:
   an oxidant compressor comprising an ac_inlet and an ac_outlet;
   a compressor comprising a compressor inlet and a compressor outlet; wherein the compressor operates independently of the oxidant compressor;
   at least one combustion system that operatively generates a working fluid and comprises a head end and a discharge end, wherein the head end is fluidly connected to: an air stream conduit, the compressor outlet, and wherein the at least one combustion system is connected to a first fuel supply;
   a primary turbine section operatively connected to the compressor, wherein the turbine section comprises a PT_inlet which receives the working fluid from the at least one combustion system, and a PT_outlet that discharges the working fluid;
   an exhaust gas recirculation (EGR) system fluidly connected between the discharge of an exhaust section and the compressor inlet, wherein the compressor inlet ingests the working fluid exiting the exhaust section; wherein the EGR system comprises a control device for adjusting a physical property of the working fluid; and
   an extraction that removes a portion of the working fluid; wherein the control device and the compressor jointly operate in a manner that determines a pressure of the working fluid flowing through the extraction.
2. The system of clause 1, wherein a combustion system immediately adjacent the extraction is operated in a substantially stoichiometric operating condition.
3. The system of any preceding clause, wherein the control device comprises at least one of: an intercooler, a compressor, or a heat exchanger.
4. The system of any preceding clause, wherein the extraction is fluidly connected to at least one of the following areas: within the compressor, the at least one combustion system, the primary turbine section, or the secondary turbine section.
5. The system of any preceding clause, further comprising a secondary combustion system fluidly connected downstream of the primary turbine section, wherein the secondary combustion system receives fuel from the first fuel supply, a second fuel supply, or combinations thereof.
6. The system of any preceding clause, further comprising a secondary turbine section connected downstream of the secondary combustion system and upstream of the exhaust section.
7. The system of any preceding clause, wherein the extraction is fluidly connected to the EGR system in a location downstream of the control device.
8. The system of any preceding clause, wherein the extraction is fluidly connected to the EGR system in a location at, or upstream of, the control device.
9. The system of any preceding clause, wherein the EGR system comprises an EGR compressor and an intercooler located between the EGR compressor and the compressor inlet.
10. The system of any preceding clause, wherein the control device and the compressor jointly operate in a manner that determines a temperature of the working fluid flowing through the extraction.
11. The system of any preceding clause, further comprising a heat recovery steam generator (HRSG) fluidly connected to the PT_outlet, wherein the HRSG operatively removes heat from the working fluid and then discharges the working fluid to the EGR system.
12. The system of any preceding clause, further comprising a heat recovery steam generator (HRSG) fluidly connected to the PT_outlet, wherein the HRSG operatively removes heat from the working fluid and then discharges the working fluid to the EGR system.
13. A system comprising:
   an oxidant compressor comprising an ac inlet and an ac outlet;
   a compressor comprising a compressor inlet and a compressor outlet; wherein the compressor operates independently of the oxidant compressor;
   at least one combustion system that operatively generates a working fluid and comprises a head end and a discharge end, wherein the head end is fluidly connected to: an air stream conduit, the compressor outlet, and wherein the at least one combustion system is connected to a first fuel supply;
   a primary turbine section operatively connected to the compressor, wherein the turbine section comprises a PT_inlet which receives the working fluid from the at least one combustion system, and a PT_outlet that discharges the working fluid;
   an exhaust gas recirculation (EGR) system fluidly connected between the discharge of an exhaust section and the compressor inlet, wherein the compressor inlet ingests the working fluid exiting the exhaust section; wherein the EGR system comprises a control device for adjusting a physical property of the working fluid; and
   a extraction system that removes a portion of the working fluid; wherein the control device and the compressor jointly operate in a manner that determines a temperature of the working fluid flowing through the extraction.
14. The system of any preceding clause, wherein a combustion system immediately adjacent the extraction is operated in a substantially stoichiometric operating condition.
15. The system of any preceding clause, wherein the control device comprises at least one of: an intercooler, a compressor, or a heat exchanger.
16. The system of any preceding clause, wherein the extraction is fluidly connected to at least one of the following areas: within the compressor, the at least one combustion system, the primary turbine section, or the secondary turbine section.
17. The system of any preceding clause, further comprising a secondary combustion system fluidly connected downstream of the primary turbine section, wherein the secondary combustion system receives fuel from the first fuel supply, a second fuel supply, or combinations thereof.
18. The system of any preceding clause, further comprising a secondary turbine section connected downstream of the secondary combustion system and upstream of the exhaust section.
19. The system of any preceding clause, wherein the extraction is fluidly connected to the EGR system in a location downstream of the control device.
20. The system of any preceding clause, wherein the extraction is fluidly connected to the EGR system in a location at, or upstream of, the control device.
21. The system of any preceding clause, wherein the EGR system comprises an EGR compressor and an intercooler located between the EGR compressor and the compressor inlet.
22. The system of any preceding clause, wherein the control device and the compressor jointly operate in a manner that determines a pressure of the working fluid flowing through the extraction.
23. The system of any preceding clause, a heat recovery steam generator (HRSG) fluidly connected to the PT_outlet, wherein the HRSG operatively removes heat from the working fluid and then discharges the working fluid to the EGR system.
24. A system comprising:
   an oxidant compressor comprising an ac_inlet and an ac_outlet;
   a compressor comprising a compressor inlet and a compressor outlet; wherein the compressor operates independently of the oxidant compressor;
   at least one combustion system that operatively generates a working fluid and comprises a head end and a discharge end, wherein the head end is fluidly connected to: an air stream conduit, the compressor outlet, and wherein the at least one combustion system is connected to a first fuel supply;
   a primary turbine section operatively connected to the compressor, wherein the turbine section comprises a PT_inlet which receives the working fluid from the at least one combustion system, and a PT_outlet that discharges the working fluid;
   an exhaust gas recirculation (EGR) system fluidly connected between the discharge of an exhaust section and the compressor inlet, wherein the compressor inlet ingests the working fluid exiting the exhaust section; wherein the EGR system comprises a control device for adjusting a physical property of the working fluid; and
   a extraction system that removes a portion of the working fluid; wherein the control device and the compressor jointly operate in a manner that determines a temperature and a pressure of the working fluid flowing through the extraction.
25. A method comprising:
   a. operating an oxidant compressor to compress an ingested oxidant;
   b. operating a compressor to compress a working fluid, wherein the operation of the oxidant compressor is independent of the operation of the compressor;
   c. passing to a primary combustion system: a compressed oxidant, derived from the oxidant compressor, and a compressed working fluid, derived from the compressor;
   d. delivering a fuel to the primary combustion system which operatively combusts a mixture of: the fuel, the compressed airstream and the compressed working fluid; creating the working fluid;
   e. passing the working fluid from the primary combustion system to a primary turbine section;
   f. operating an EGR system to recirculate the working fluid exiting an exhaust section to flow into an inlet of the compressor; wherein the EGR system comprises a control device for adjusting a physical property of the working fluid;
   g. extracting a portion of the working fluid; wherein the working fluid is nearly oxygen-free, and the primary combustion system operates in a substantially stoichiometric manner; and
   h. operating the control device and the compressor in a manner that determines a pressure of the working fluid flowing through the extraction;
   i. wherein the method yields a substantially oxygen-free flow of a desirable gas.
26. The method of any preceding clause, wherein the control device comprises at least one of: an intercooler, an EGR compressor, or a heat exchanger.
27. The method of any preceding clause, further comprising a secondary combustion system fluidly connected downstream of the primary turbine section, wherein the secondary combustion system receives fuel from a second fuel supply.
28. The method of any preceding clause, further comprising a secondary turbine section connected downstream of the secondary combustion system and upstream of the exhaust section.
29. The method of any preceding clause, further comprising actively changing a pressure ratio across the compressor to create a desired pressure of the working fluid flowing through the extraction.
30. The method of any preceding clause, further comprising actively changing pressure ratios across the compressor and the control device to create a desired pressure of the working fluid flowing through the extraction.
31. The method of any preceding clause, wherein the EGR system comprises an EGR compressor and an intercooler located between the compressor and the compressor inlet.
32. The method of any preceding clause, further comprising: controlling the intercooler in a manner that lowers a temperature of the working fluid.
33. The method of any preceding clause, further comprising:
   a. actively changing pressure ratios across the compressor and the booster compressor to create a desired pressure of the working fluid flowing through the extraction; and
   b. controlling the intercooler in a manner that lowers a temperature of the working fluid.
34. A method comprising :
   a. operating an oxidant compressor to compress an ingested oxidant;
   b. operating a compressor to compress a working fluid, wherein the operation of the oxidant compressor is independent of the operation of the compressor;
   c. passing to a primary combustion system: a compressed oxidant, derived from the oxidant compressor, and a compressed working fluid, derived from the compressor;
   d. delivering a fuel to the primary combustion system which operatively combusts a mixture of: the fuel, the compressed airstream and the compressed working fluid; creating the working fluid;
   e. passing the working fluid from the primary combustion system to a primary turbine section;
   f. operating an EGR system to recirculate the working fluid exiting an exhaust section to flow into an inlet of the compressor; wherein the EGR system comprises a control device for adjusting a physical property of the working fluid;
   g. extracting a portion of the working fluid; wherein the working fluid is nearly oxygen-free, and the primary combustion system operates in a non- stoichiometric manner; and
   h. operating the control device and the compressor in a manner that determines a parameter of the working fluid flowing through the extraction;
   i. wherein the method yields a substantially oxygen-free flow of a desirable gas.
35. The method of any preceding clause, further comprising a secondary combustion system fluidly connected downstream of the primary turbine section, wherein the secondary combustion system receives fuel from a second fuel supply.
36. The method of any preceding clause, further comprising a secondary turbine section connected downstream of the secondary combustion system and upstream of the exhaust section.
37. The method of any preceding clause, wherein the parameter comprises at least one of: a pressure, a temperature, humidity, or other physical property.

## Claims

1. A system (100) comprising:
an oxidant compressor (155) comprising an ac_inlet (157) and an ac_outlet (159);
a compressor (120) comprising a compressor inlet and a compressor outlet; wherein the compressor operates independently of the oxidant compressor;
at least one combustion system (130) that operatively generates a working fluid and comprises a head end and a discharge end, wherein the head end is fluidly connected to: an air stream conduit, the compressor outlet, and wherein the at least one combustion system is connected to a first fuel supply;
a primary turbine section (135) operatively connected to the compressor, wherein the turbine section comprises a PT_inlet which receives the working fluid from the at least one combustion system, and a PT_outlet that discharges the working fluid;
an exhaust gas recirculation (EGR) system (240) fluidly connected between the discharge of an exhaust section and the compressor inlet, wherein the compressor inlet ingests the working fluid exiting the exhaust section; wherein the EGR system comprises a control device for adjusting a physical property of the working fluid; and
an extraction (210) that removes a portion of the working fluid; wherein the control device and the compressor jointly operate in a manner that determines a pressure of the working fluid flowing through the extraction.

2. The system (100) of claim 1, wherein a combustion system (130) immediately adjacent the extraction is operated in a substantially stoichiometric operating condition.

3. The system (100) of any preceding claim, wherein the control device comprises at least one of: an intercooler, a compressor, or a heat exchanger.

4. The system (100) of any preceding claim, wherein the extraction (210) is fluidly connected to at least one of the following areas: within the compressor, the at least one combustion system, the primary turbine section, or the secondary turbine section.

5. The system (100) of any preceding claim, further comprising a secondary combustion system (150) fluidly connected downstream of the primary turbine section (135), wherein the secondary combustion system receives fuel from the first fuel supply, a second fuel supply, or combinations thereof.

6. The system (100) of claim 5, further comprising a secondary turbine section connected downstream of the secondary combustion system (150) and upstream of the exhaust section.

7. The system (100) of any preceding claim, wherein the extraction (210) is fluidly connected to the EGR system in a location downstream of the control device.

8. The system (100) of any preceding claim, wherein the extraction (210) is fluidly connected to the EGR system in a location at, or upstream of, the control device.

9. The system (100) of any preceding claim, wherein the EGR system (240) comprises an EGR compressor and an intercooler located between the EGR compressor and the compressor inlet.

10. The system (100) of any preceding claim, wherein the control device and the compressor (120) jointly operate in a manner that determines a temperature of the working fluid flowing through the extraction.

11. The system (100) of any preceding claim, further comprising a heat recovery steam generator (HRSG) (110) fluidly connected to the PT_outlet, wherein the HRSG (110) operatively removes heat from the working fluid and then discharges the working fluid to the EGR system.

12. A method comprising:
a. operating an oxidant compressor (155) to compress an ingested oxidant;
b. operating a compressor (120) to compress a working fluid, wherein the operation of the oxidant compressor is independent of the operation of the compressor;
c. passing to a primary combustion system (130): a compressed oxidant, derived from the oxidant compressor, and a compressed working fluid, derived from the compressor;
d. delivering a fuel to the primary combustion system (130) which operatively combusts a mixture of: the fuel, the compressed airstream and the compressed working fluid; creating the working fluid;
e. passing the working fluid from the primary combustion system (130) to a primary turbine section;
f. operating an EGR system (240) to recirculate the working fluid exiting an exhaust section to flow into an inlet of the compressor; wherein the EGR system comprises a control device for adjusting a physical property of the working fluid;
g. extracting a portion of the working fluid; wherein the working fluid is nearly oxygen-free, and the primary combustion system (130) operates in a substantially stoichiometric manner; and
h. operating the control device and the compressor in a manner that determines a pressure of the working fluid flowing through the extraction (210);
i. wherein the method yields a substantially oxygen-free flow of a desirable gas.

13. The method of claim 12, further comprising actively changing a pressure ratio across the compressor (120) to create a desired pressure of the working fluid flowing through the extraction (210).

14. The method of claim 12 or claim 13, further comprising actively changing pressure ratios across the compressor (120) and the control device to create a desired pressure of the working fluid flowing through the extraction (210).

15. The method of any of claims 12 to 14, further comprising: controlling an intercooler (265) in a manner that lowers a temperature of the working fluid.
